# EUROPEAN PATENT APPLICATION

(11) **EP 4 268 577 A1**
(43) Date of publication of application: **01.11.2023**
(21) Application number: 22170251.7
(22) Date of filing: 27.04.2022
(51) Int. Cl.: A01G 9/24

(54) **A SYSTEM AND METHOD FOR PROVIDING LIGHT TO PLANTS**

(71) Applicant: Tridonic GmbH & Co. KG, 6851 Dornbirn (AT)
(72) Inventor: Künzli, Markus, 6850 Dornbirn (AT); Schönberger, John, 6850 Dornbirn (AT); Kistler, Roger, 6850 Dornbirn (AT)
(74) Representative: Beder, Jens

(57) **Abstract**

The present invention provides a system for providing light to plants. The system comprises a light source configured to be positioned above the plants for providing, in a vertical direction of growth of the plants, the light to the plants. Further, the system comprises an optic arrangement for setting, in the vertical direction of growth of the plants, an angle of radiation of the light, and a control unit for controlling the optic arrangement. The control unit is configured to control the optic arrangement to change the angle of radiation of the light depending on a height of the plants. Further, a method for providing light to plants is provided.

## Description

The present invention relates to a system for providing light to plants and to a method for providing light to plants.

A light source, such as a luminaire, for providing light to plants may be referred to as horticultural light source or plant light source respectively horticultural luminaire or plant luminaire. Such a light source may be used for supporting growth of plants, such as plants that are cultivated indoor (e.g. in a greenhouse, vertical farm etc.) or outside (e.g. on a field etc.). Such light sources may be especially used in an agricultural context for increasing the chance of a healthy crop, i.e. achieving a healthy crop. For example, when cultivating plants indoor natural sun light shining on the plants may be reduced or not available at all. In case of cultivating plants outdoors in an environment with reduced sunlight, sunlight shining on the plants may also be reduced. A reduction or non-availability of sunlight has a negative effect on the growth of the plants, because the plants need sunlight for photosynthesis, which is needed for plant growth.

In order to compensate for this, a light source, such as one or more luminaires, may be used for providing light to the plants in order to support the growth of the plants. Such a light source may emit light that is especially adapted for supporting plants growth. For example, the light emittable by the light source may comprise or be photosynthetically active radiation (PAR) light. In addition, the light emittable by the light source may comprise or be ultraviolet (UV) radiation, such as UV-A, UV-B and/or UV-C radiation. The UV radiation (e.g. the UV-A radiation) may help the light source to imitate sunlight and, in addition to the PAR light, may have a positive effect on the plants. For example, imitating sunlight may help increasing a period of photosynthesis in an outdoor environment, where the period of natural sunlight is reduced, and thus may increase a period during which plants perform photosynthesis and, thus, are able to grow.

The UV-A radiation may not only support or trigger a production of proteins, amino acids and enzymes in plants, but also it may enhance pollination of plants by insects. UV-B radiation and UV-C radiation may be used for cleaning (e.g. sterilizing) water and surfaces. When used for plants, the UV-B radiation and/or UV-C radiation may be used for eliminating pathogens on the plants, which may support a healthy plant growth of the plants. In addition, UV radiation is used by insects, such as bees, for navigation to flowers. Thus, if in an indoor environment, such as a green house, no UV radiation is available, it may be difficult for insects used for pollinating the plants to locate the plants, in particular the flowers of the plants to be pollinated.

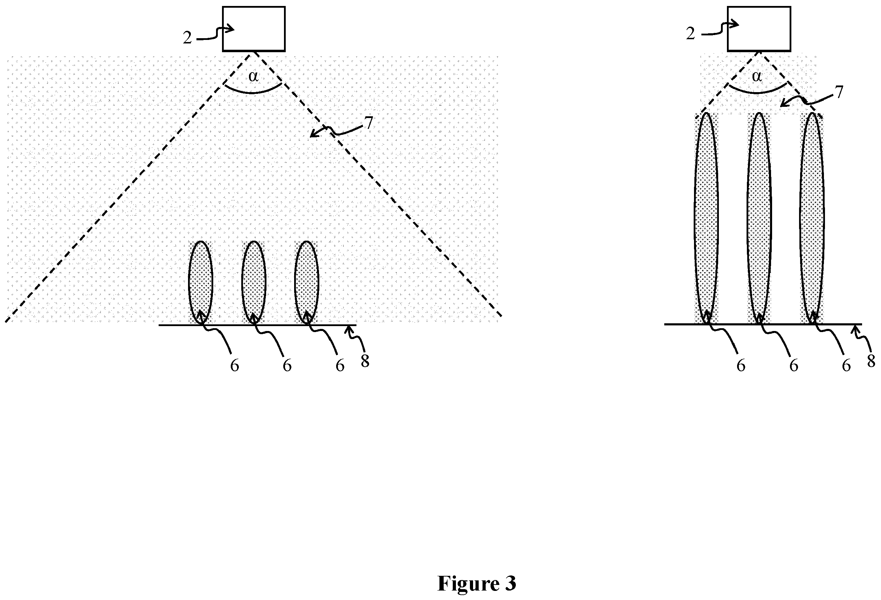

**Figure 3** schematically shows two different states of an example of providing light to plants. In **Figure 3** an example of a light source 2 for providing light 7 to plants 6 growing in an cultivation area 8 (e.g. a bedding) is shown. Exemplarily, three plants 6 are shown that grow in a vertical direction. On the left side of Figure 3, an example of an initial height of the plants 6 is shown. On the right side of Figure 3, an example of a height of the plants 6 after a growing period has elapsed (e.g. days and/or months, depending on the growth speed of the plants 6) is shown. The right side of Figure 3 may show a state shortly before the plants 6 are ready to be harvested. In order for the plants 6 to be provided with light 7 during the complete growing period from the initial height to the height at which they may be ready for harvesting, the light source 2 emits the light with an angle of radiation α that allows light 7 to reach all the plants 6 during the complete growing period.

This has the disadvantage that at the beginning of the growing period, i.e. when the plants have a small height (e.g. the initial height shown on the left side of Figure 3), light does not only reach the plants 6 in the cultivation area 8, but also reaches an area outside the cultivation area 8. Thus, the light 7 may reach a person present (e.g. working) in the area outside of the cultivation area 8. This may be disadvantageous, because the person may be dazzled or blinded by the light 7. In addition, in case the light 7 comprises UV-radiation, the light 7 may be harmful for the person (e.g. damaging the eyes of the person). The terms "being blinded by light" and "being dazled by light" may be used as a synonym.

Therefore, it is an object of the present invention to provide lighting for plants without the above-described disadvantages. It is in particular an object of the present invention to provide lighting for plants without disturbing persons that are present near the plants.

These and other objects, which become apparent upon reading the following description, are solved by the subject-matter of the independent claim. The dependent claims refer to preferred embodiments of the invention.

According to a first aspect of the invention, a system for providing light to plants is provided. The system comprises a light source configured to be positioned above the plants for providing, in a vertical direction of growth of the plants, the light to the plants. Further, the system comprises an optic arrangement for setting, in the vertical direction of growth of the plants, an angle of radiation of the light, and a control unit for controlling the optic arrangement. The control unit is configured to control the optic arrangement to change the angle of radiation of the light depending on a height of the plants.

With other words, the present invention proposes to adapt light emission of a light source for providing light to plants to the height of the plants by changing the angle of radiation of the light emitted by the light source depending on the height of the plants. For this, an optic arrangement and a control unit for controlling the optic arrangement are provided in addition to the light source forming a system for providing light to plants.

Thus, the system of the first aspect allows changing the light emission of the light source such that the light emitted by the light source merely reaches or impinges on the plants (e.g. a surface of the plants). This allows light emitted by the light source with an angle of radiation that usually would reach an area outside a cultivation area (e.g. bedding for the plants) without the plants being present, to be shielded or prevented by the plants (due to their height) from reaching the area outside the cultivation area. As a result, the light emitted by the light source does not travel or impinge persons located outside the cultivation area near the cultivation area. Therefore, the persons are not dazzled or harmed by the light (e.g. in case the light comprise UV radiation).

In the light of the above, the system of the first aspect for providing light to plants is advantageous compared to the light source of Figure 3 for providing light to the plants.

The plants may be plants that are grown for food purposes, medical purposes, fuel purposes or other known purposes. The plants may be plants of a monoculture, i.e. of the same plant type. The plants may be cultivated or grown in a cultivation area (e.g. bedding for plants). That is, the light source may be configured to be positioned above the cultivation area comprising the plants and, thus, above the plants for providing, in a vertical direction of growth of the plants, the light to the plants. The plants may be located indoor (e.g. in a green house, vertical farm etc.) or outside (e.g. on a field etc.). Therefore, the system may be a system for providing light to plants in an indoor environment and/or an outdoor environment.

The light source may be referred to as horticultural light source or plant light source. The light source may be configured to emit light that is beneficial for plant growth of the plants or supports the plant growth of the plants. The passages "output light" and "radiate light" maybe used as synonyms for the passage "emit light". For example, the light source may be configured to emit photosynthetically active radiation (PAR) light. In addition or alternatively, the light source may be configured to emit ultraviolet (UV) radiation. The UV radiation may comprise UV-A radiation, UV-B radiation and/or UV-C radiation. In other words, the light providable by the light source to the plants may comprise PAR light and/or UV radiation. In addition or alternatively, the light source may emit any other radiation (electromagnetic waves) beneficial for a healthy growth of the plants. The light emittable by the light source may have a spectrum (e.g. color spectrum) that is optimized with regard to supporting growth of the plants. The light source may be configured to change the type of radiation (e.g. spectrum) emitted by the light source. For example, the light source may be configured to emit PAR light and for some periods of time to additionally or alternatively emit UV radiation.

The light source may comprise one or more light emitting diodes (LEDs) for providing the light to the plants. For this, any one or more types of LEDs may be used. In addition or alternatively, the light source may comprise any other one or more lighting means types known in the art for providing light to the plants.

The control unit may comprise or be a processor, microprocessor, controller, microcontroller, application specific circuit (ASIC), field-programmable gate array (FPGA) and/or any other known control unit type. The optic arrangement may be configured to be electrically controlled by the control unit. The control unit may be configured to provide control signals to the optic arrangement for controlling the optic arrangement to change the angle of radiation of the light depending on the height of the plants. For this, the control unit may be configured to communicate with the optic arrangement (e.g. provide the control signals to the optic arrangement) by a wireless and/or wire-bound communication. The control unit and the optic arrangement may be electrically connected with each other. The term "radiation angle" may be used as a synonym for the term "angle of radiation".

The control unit may be configured to control the light source, i.e. light emission of the light source. For example, the control unit may be configured to control a light intensity of the light source and/or turning on and off the light source. Optionally, the control unit may be configured to control the type of radiation emitted by the light source. For example, the control unit may be configured to control the light source to emit PAR light and for some period of times to additionally or alternatively emit UV radiation.

Optionally, the control unit is configured to control the optic arrangement to change the angle of radiation of the light such that the greater the height of the plants the greater the angle of radiation.

This allows all plants, e.g. the top of all plants, to be provided with light irrespective of the height of the plants. For example, this allows the surface of all plants to be provided with light irrespective of the height of the plants.

The control unit may be configured to control the optic arrangement to change the angle of radiation of the light such that the smaller the height of the plants the smaller the angle of radiation. This allows to adapt the lighting to the plants, in case the height of the plants is reduced again during the growth phase of the plants (e.g. due to harvesting).

The control unit may receive (e.g. via a wireless communication and/or wire bound communication) from outside the system (e.g. an operator or a control center for monitoring plant growth) information on the height of the plants. The control unit may determine the angle of radiation using this information. For example, the control unit may be configured to compute the angle of radiation by inputting the information on the height of the plants into an algorithm. In addition or alternatively, the control unit may be configured to determine the angle of radiation by using the information on the height of the plants and a look-up table or database storing for different heights of the plants the respective angle of radiation. The algorithm respectively the look-up table or database may be adapted to the installation of the system, in particular of the light source and optic arrangement, with regard to the plants (e.g. to the position and orientation of the light source and optic arrangement with regard to the plants).

Optionally, the control unit is configured to control the optic arrangement to set an initial angle of radiation of the light depending on an initial height of the plants.

Optionally, the control unit is configured to control the optic arrangement to change the angle of radiation depending on the height of the plants by controlling the optic arrangement to change the angle of radiation depending on an elapsed time since an initial point in time.

For this, the control unit may be configured to compute the angle of radiation by inputting the elapsed time into an algorithm. The algorithm may be adapted for the plant type of the plants and optional one or more environmental factors (e.g. humidity, temperature, nutrition, light intensity etc. at the cultivation area of the plants) that have an impact on the speed of growth of the plants. In addition or alternatively, the control unit may be configured to determine the angle of radiation by using the elapsed time and a look-up table or database storing for different elapsed times the respective angle of radiation. The look-up table or database may store for each value of the different elapsed times different values of the angle of radiation for different plant types and optionally one or more environmental factors (e.g. humidity, temperature, nutrition, light intensity etc. at the cultivation area of the plants) that have an impact on the speed of growth of the plants.

The control unit may be configured to control the optic arrangement to change the angle of radiation of the light such that the greater the elapsed time the greater the angle of radiation.

The control unit may be configured to repeatedly update the angle of radiation of the light and control the optic arrangement to set the updated angle of radiation of the light. The control unit may be configured to periodically update the angle of radiation of the light and control the optic arrangement to set the updated angle of radiation of the light. In addition or alternatively, the control unit may be triggered from outside the system (e.g. an operator or a control center for monitoring plant growth) to determine the angle of radiation of the light depending on the height of the plants (i.e. update the angle of radiation) and control the optic arrangement to set the determined (i.e. updated) angle of radiation of the light.

The control unit may be configured to receive information on the angle of radiation of the light from outside the system (e.g. an operator or a control center for monitoring plant growth) and control the optic arrangement to change the angle of radiation of the light depending on the received information.

The control unit may be configured to communicate with outside the system (e.g. an operator or a control center for monitoring plant growth) by a wireless and/or wire bound communication.

Optionally, the system comprises a measurement unit for measuring the height of the plants. The control unit may be configured to control the optic arrangement to change the angle of radiation depending on the height of the plants by controlling the optic arrangement to change the angle of radiation depending on the measured height of the plants.

The control unit may be configured to control the measurement unit. The control unit may be configured to communicate with the measurement unit wirelessly and/or wire bound. The measurement unit may be electrically connected to the control unit. The measurement unit may be part (optionally at least partly) of the control unit.

For example, the measurement unit may comprise a camera for taking images of the plants and a processing unit for determining the height of the plants by processing the images. In addition or alternatively, the measurement unit may comprise multiple lighting means and multiple light sensors that may be vertically arranged at the cultivation area of the plants in pairs for providing photoelectric relays at different heights. The measurement unit may be configured to determine the height of the plants depending on which of the photoelectric relays detect presence of plants. In addition or alternatively, the measurement unit may comprise one or more LIDAR (light detection and ranging) sensors for measuring the height of the plants. In addition or alternatively, the measurement unit may be configured for any other known method of measuring the height of the plants.

The measurement unit may be configured to measure the height of the plants by measuring the height of at least one plant of the plants.

In addition or alternatively, the measurement unit may be configured to measure the height of multiple plants, statistically process or evaluate the measured heights of the multiple plants and output a result of the statistical processing as the measured height of the plants. The statically processing may be performed by the control unit, wherein the measurement unit may provide the control unit with the measured heights of the multiple plants. For example, statistically processing the measured heights may comprise determining a maximum height among the measured heights and outputting or using the maximum height as the measured height of the plants. Alternatively, statically processing the measured heights may comprise computing a mean of the measured heights or two or more of the greatest heights of the measured heights and outputting or using the mean height as the measured height of the plants.

The measurement unit may be configured to measure the height of the plants by measuring the height of at least one plant of the plants that is arranged at a border of an area comprising the plants.

The area comprising the plants may be referred to as cultivation area (of the plants). For example, it may be a bedding for plants, an area of a field etc.

Optionally, the measurement unit is configured to be positioned in a vertical direction above the plants and to measure the height of the plants by measuring in the vertical direction a distance to at least one plant of the plants.

The measurement unit may be configured to determine the height of the plants by using its own height with regard to a reference surface, e.g. the surface of an area (cultivation area) in which the plants are arranged, and the measured distance. The distance to a plant may be understood as the distance to the top of the plant. For example, the measurement unit may subtract the measured distance from its own height to compute the height of the at least one plant and output or use this computed height as the measured height of the plants.

Optionally, the optic arrangement comprises at least one optic element configured to change the angle of radiation of the light by changing a focal length of the optic arrangement.

The control unit may be configured to transmit a control signal to the optic arrangement indicating the desired angle of radiation and the optic arrangement may be configured to determine the focal length of the optic arrangement for achieving the desired angle. For this, the optic arrangement may be configured to compute the focal length using an algorithm and/or use a look-table or database comprising for different angle of radiations different focal lengths. The algorithm respectively the look-up table or database may be adapted to the installation of the system, in particular of the light source and optic arrangement, with regard to the plants (e.g. to the position and orientation of the light source and optic arrangement with regard to the plants).

The control unit may be configured to transmit a control signal to the optic arrangement indicating the focal length for achieving a desired angle of radiation. For this, the control unit may be configured according the aforementioned optional features with regard to determining the focal length for a desired angle of radiation.

The control unit may be configured to control the optic arrangement to change the angle of radiation of the light by controlling the optic arrangement (e.g. the at least one optic element) to change the focal length of the optic arrangement. Optionally, the control unit may be configured to control changing the angle of radiation of the light by controlling the at least one optic element to change its focal length and, thus, the focal length of the optic arrangement.

The optic arrangement may comprise a lens system of one or more lenses for setting the angle of radiation of the light provided by the light source. Thus, the aforementioned focal length may be the focal length of the lens system.

The at least one optic element may be at least one liquid crystal lens.

The at least one liquid crystal lens may be configured to change the angle or radiation of the light that can be provided by the light source to the plants by changing the focal length of the optical arrangement. The focal length of the optic arrangement may be the focal length of the at least one liquid crystal lens.

The control unit may be configured to change the angle of radiation of the light that can be provided by the light source to the plants by changing the focal length of the at least one liquid crystal lens. For this, the control unit may be configured to send control signals to the optic arrangement. For example, the control unit may be configured to change the focal length of the at least one liquid crystal lens (i.e. change or tune the focus of the at least one liquid crystal lens) and, thus, of the optical arrangement by applying or triggering an application of a voltage to electrodes of the liquid crystal lens, wherein a liquid crystal layer is arranged between the electrodes. The at least one liquid crystal lens may be any known liquid crystal lens with tunable focus.

In addition or alternatively, the at least one optic element may be at least one movable lens.

The at least one movable lens may be configured to change the angle or radiation of the light that can be provided by the light source to the plants by changing the focal length of the optical arrangement. The focal length of the optic arrangement may be the focal length of the at least one movable lens.

The control unit may be configured to change the angle of radiation of the light that can be provided by the light source to the plants by changing the focal length of the at least one movable lens. For this, the control unit may be configured to send control signals to the optic arrangement. For example, the control unit may be configured to change the focal length of the at least one movable lens (i.e. change or tune the focus of the at least one movable lens) and, thus, of the optical arrangement by electrically controlling a movement of the at least one movable lens towards or away from the light source. This changes a distance between the light source and the at least one movable lens. This may change the focal length of the optical arrangement

Optionally, the control unit is configured to control the light source to keep the light intensity of the light constant while controlling the optic arrangement to change the angle of radiation of the light.

This ensures that the plants are constantly supplied with the same light intensity and, thus ,light energy. Therefore, this supports a healthy plant growth of the plants. Since the system allows avoiding light to be emitted to outside a cultivation area of the plants, there is no need to reduce the light intensity of the for reducing a dazzling of a person or harm of a person (e.g. in case the light comprises UV radiation) by the light, when the person is near the cultivation area.

Optionally, the system is a luminaire for providing the light to the plants.

The luminaire may be referred to as horticultural luminaire or plant luminaire.

In order to achieve the system according to the first aspect of the present invention, some or all of the above described optional features may be combined with each other.

According to a second aspect of the invention, a method for providing light to plants is provided. The method comprises providing, in a vertical direction of growth of the plants, from a light source positioned above the plants the light to the plants; and controlling an optic arrangement to change the angle of radiation of the light depending on a height of the plants.

The above description with regard to the system according to first aspect of the present invention is correspondingly valid for the method according to the second aspect of the invention.

The method according to the second aspect of the invention achieves the same advantages as the system according to the first aspect of the invention.

In order to achieve the method according to the second aspect of the present invention, some or all of the above described optional features may be combined with each other.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which
- **Figure 1**: schematically shows a block diagram of an example of a system according to an embodiment of the invention for providing light to plants;
- **Figure 2**: schematically shows two different states of the system of Figure 1; and
- **Figure 3**: schematically shows two different states of an example of providing light to plants.

In the Figures, corresponding elements have the same reference signs. The proportions and dimensions of the elements shown in the Figures do not represent the components of the system to scale, but are merely chosen to describe the structure and function of the system.

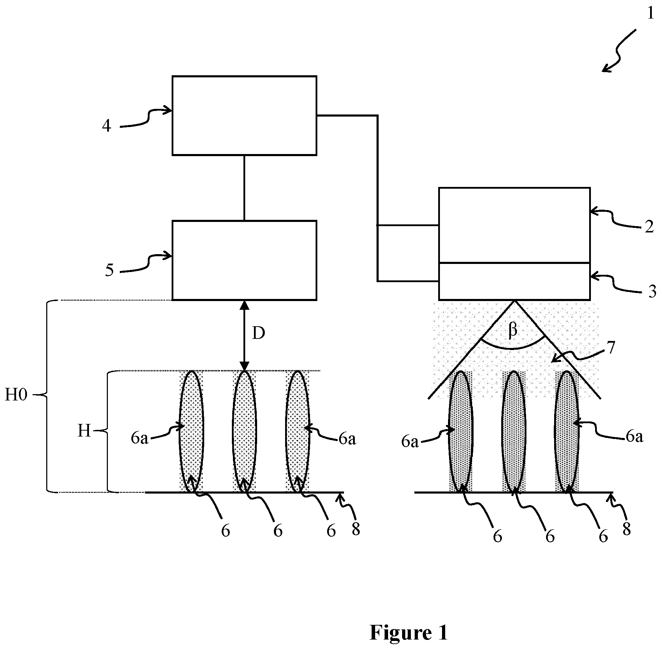

**Figure 1** schematically shows a block diagram of an example of a system according to an embodiment of the invention for providing light to plants. The system of Figure 1 is an example of the system according to the first aspect of the present invention. The description of the system according to the first aspect is correspondingly valid for the system of Figure 1.

The system 1 of Figure 1 is a system for providing light 7 to plants 6. Optionally, the system 1 may be a luminaire for providing light to plants, i.e. a horticultural luminaire or plant luminaire. As shown on the right side of Figure 1, the system 1 comprises a light source 2 configured to be positioned above the plants 6 for providing, in a vertical direction of growth of the plants 6, the light 7 to the plants 6. Further, the system 1 comprises an optic arrangement 3 for setting, in the vertical direction of growth of the plants 6, an angle of radiation β of the light 7. In addition, the system 1 comprises a control unit 4 for controlling the optic arrangement 3. The control unit 4 is configured to control the optic arrangement 3 to change the angle of radiation β of the light 7 depending on a height H of the plants 6.

As shown in Figure 1, the optic arrangement 3 and optionally the light source 2 may be electrically connected with the control unit 4, for example via a wired bus (e.g. data bus). The control unit 4 may be configured to control the light source 2, e.g. light emission of the light source 2. For example, the control unit 4 may be configured to control light intensity of the light 7 emittable by the light source 2 and/or turning on and off of the light source 2. Optionally, the control unit 4 may be configured to control the type of radiation emitted by the light source 2.

The plants 6 maybe arranged in a cultivation area 8 (e.g. a bedding, an area of a field etc.). The number of plants 6 shown in Figure 1 is only by way of example. The plants 6 maybe optionally plants of a monoculture.

The light source 2, the optic arrangement 3 and control unit 4 may be implemented as described above with regard to the system of the first aspect of the invention. Thus, for further details on possible implementation forms of the light source 2, the optic arrangement 3 and control unit 4 reference is made to the corresponding description of the system of the first aspect of the invention.

As shown in Figure 1, the system may optionally comprise a measurement unit 5 for measuring the height H of the plants 6. Alternatively or additionally, the control unit 4 may receive information on the height H of the plants from outside the system 1 (e.g. from an operator or a control center for monitoring plant growth). As shown in Figure 1, the optional measurement unit 5 maybe electrically connected with the control unit 4 for example via a wired bus (e.g. data bus). The optional measurement unit 5 maybe implemented as described above with regard to the system of the first aspect of the invention. Thus, for further details on possible implementation forms of the measurement unit 5 reference is made to the corresponding description of the system of the first aspect of the invention.

The control unit 4 may be configured to control the optic arrangement 3 to change the angle of radiation β depending on the height H of the plants 6 by controlling the optic arrangement 3 to change the angle of radiation β depending on the measured height of the plants 6 (measured by the optional measurement unit 5). In addition or alternatively, the control unit 4 may be configured to control the optic arrangement 3 to change the angle of radiation β depending on information on the height of the plants 6 received from outside the system 1.

Thus, the control unit 4 may be configured to directly use the height H of the plants 6 (e.g. in the form of a measured height and/or information on the height H receivable from outside the system 1) for changing the angle of radiation β of the light 7 that can be provided by the light source 2 to the plants. In addition or alternatively, the control unit 4 may be configured to use an elapsed time since an initial point in time for changing the angle of radiation β of the light 7. That is, optionally the control unit 4 is configured to control the optic arrangement 3 to change the angle of radiation β of the light 7 depending on the height H of the plants 6 by controlling the optic arrangement 3 to change the angle of radiation β depending on an elapsed time since an initial point in time.

For further information on how the control unit 1 may be configured to change the angle of radiation β of the light 7 (that can be provided by the light source 2 to the plants 6) depending on information of the height of the plants 6 receivable from outside of the system 1, on the measured height of the plants 6 (measured by the measurement unit 5) and/or on an elapsed time since an initial point in time reference is made to the corresponding description of the system of the first aspect of the present invention. In the following, an example of a possible implementation of the system with regard thereto is described with regard to Figure 1, which is not limiting the present invention to this implementation.

The plants 6 shown on the left side of Figure 1 are the same plants 6 shown on the right side of Figure 1. They are merely duplicated on the left side for enabling a good illustration for a description of an example of a possible function of the optional measurement unit 5 and the control unit 4 of the system 1.

The measurement unit 5 may be configured to measure the height H of the plants 6 by measuring the height of one plant of the plants 6. This may be the case when the plants 6 are of the same plant type, i.e. they are plants of a monoculture. In this case, the plants may be assumed to equally grow under the same conditions, so that the plants 6 of the same cultivation area 8 may be assumed to be of the same height H. Alternatively, the measurement unit 5 may be configured to measure the height H of the plants 6 by measuring the height of multiple of the plants 6. In this case, the measurement unit 5 or the control unit 4 may be configured to statistically process or evaluate the measured heights of the multiple plants and output respectively use a result of the statistical processing as the measured height H of the plants 6.

Optionally, the measurement unit 5 may be configured to measure the height H of the plants by measuring the height of at least one plant 6a of the plants 6 that is arranged at a border of the area 8 (may be referred to as cultivation area) comprising the plants 6. This may be advantageous because the plants 6a at the border of the cultivation area 8 are the plants that shield or prevent the light 7 providable by the light source 2 from reaching ground at an area outside the cultivation area 8, when the height of these plants 6a is high enough for this.

As shown in Figure 1, the measurement unit 5 may be positioned in a vertical direction above the plants 6 for measuring the height H of the plants 6 by measuring in the vertical direction a distance D to at least one plant of the plants 6. The measurement unit may determine the height H of the plants by using its own height Ho with regard to the surface of the cultivation area 8, in which the plants 6 are arranged, and the measured distance D. For example, the measurement unit 5 may subtract the distance D from its own height Ho to compute the height H of the at least one plant and use this computed height as the measured height H of the plants 6.

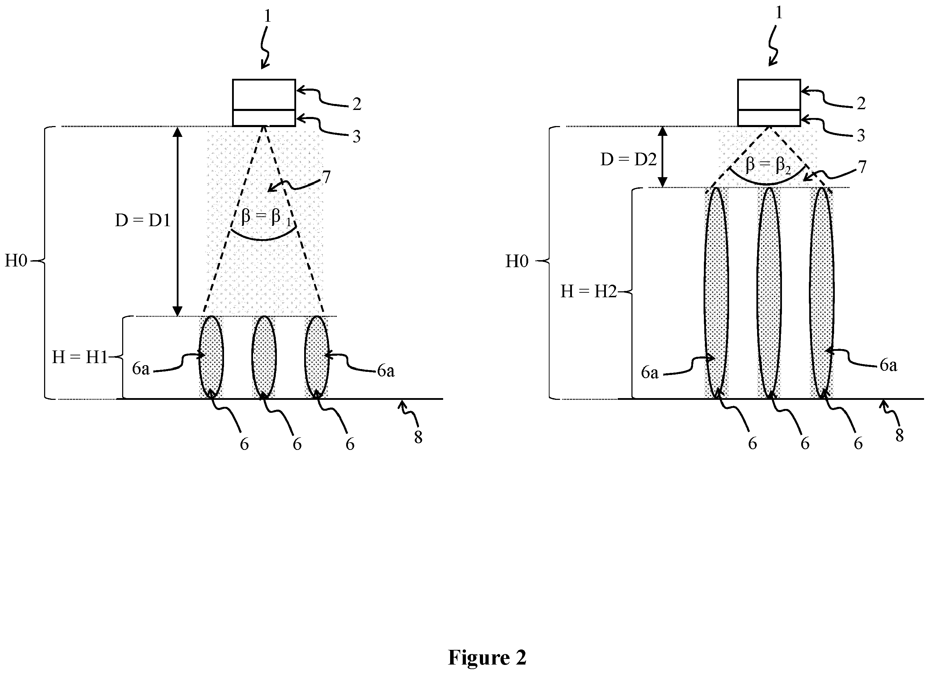

**Figure 2** schematically shows two different states of the system of Figure 1. The state shown on the left side of Figure 2 shows the plants 6 at an earlier time compared to the state shown on the right side of Figure 2, i.e. on the right side the plants 6 have grown compared to the left side.

On the left side of Figure 2 the height H of the plants 6 equals to a first height H1 that is smaller than the height H of the plants 6 shown on the right side of Figure 2 equaling to a second height H2 (Hi < H2). As a result, a first distance D1 to the plants 6 (in particular to the top of the plants 6), which may be measured by the measurement unit 5 when the plants have the first height Hi, is greater than a second distance D2 to the plants 6, which may be measured by the measurement unit 5 when the plants have the second height H2 (Di > D2).

The control unit 4 (not shown in Figure 2) may be configured to control the optic arrangement 3 to change the angle of radiation β of the light 7 providable by the light source 2 to the plants 6 such that the greater the height H of the plants 6 the greater the angle of radiation β (and optionally vice versa). Therefore, the angle of radiation β of the light 7 emitted to the plants 6 having the first height H1 equals to a first radiation angle β₁ that is smaller than a second radiation angle β₂ of the light 7 with which the plants 6 having the second height H2 are lighted or provided (β₁ < β₂).

As indicated by Figure 1, changing, via the optic arrangement 3, the angle of radiation β of the light 7 depending on the height H of the plants 6, allows that only the plants 6 in the cultivation area 8 are provided with light without light reaching an area outside the cultivation area 8. Namely, the light 7 that can be provided by the light source 2 is shielded or prevented by the plants 6, in particular the plants 6a at the border of the cultivation area 8, from reaching a ground in an area outside the cultivation area 8. Therefore, the system of Figures 1 and 2 may provide light for plants without dazzling or damaging persons that are present next to the cultivation area 8 in an area outside the cultivation area 8.

As outlined already above, for changing the angle of radiation β of the light 7 that can be provided by the light source 2 to the plants 6 the optic arrangement 3 is provided.

For this, the optic arrangement 3 may comprise at least one optic element (not shown in Figures 1 and 2) configured to change the angle of radiation β of the light 7 by changing a focal length of the optic arrangement 3. The at least one optic element may be at least one liquid crystal lens. In addition or alternatively, the at least one optic element may be at least one movable lens. The control unit 4 may be configured to control changing the angle of radiation β of the light 7 by controlling the at least one optic element to change its focal length and, thus, the focal length of the optic arrangement.

For further details, e.g. additional or alternative optional implementation forms, of the system of Figures 1 and 2, reference is made to the description of the system according to the first aspect of the invention.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A system (1) for providing light (7) to plants (6), the system (1) comprising
- a light source (2) configured to be positioned above the plants (6) for providing, in a vertical direction of growth of the plants (6), the light (7) to the plants (6),
- an optic arrangement (3) for setting, in the vertical direction of growth of the plants (6), an angle of radiation (β) of the light (7), and
- a control unit (4) for controlling the optic arrangement (3); wherein
- the control unit (4) is configured to control the optic arrangement (3) to change the angle of radiation (β) of the light (7) depending on a height (H) of the plants (6).

2. The system (1) according to claim 1, wherein
- the control unit (4) is configured to control the optic arrangement (3) to change the angle of radiation (β) of the light (7) such that the greater the height (H) of the plants (6) the greater the angle of radiation (β).

3. The system (1) according to claim 1 or 2, wherein
- the control unit (4) is configured to control the optic arrangement (3) to set an initial angle of radiation of the light (7) depending on an initial height of the plants (6).

4. The system (1) according to any one of the previous claims, wherein
- the control unit (4) is configured to control the optic arrangement (3) to change the angle of radiation (β) depending on the height (H) of the plants (6) by controlling the optic arrangement (3) to change the angle of radiation (β) depending on an elapsed time since an initial point in time.

5. The system (1) according to claim 4, wherein
- the control unit (4) is configured to control the optic arrangement (3) to change the angle of radiation (β) of the light (7) such that the greater the elapsed time the greater the angle of radiation (β).

6. The system (1) according to any one of the previous claims, wherein
- the system (1) comprises a measurement unit (5) for measuring the height (H) of the plants (6), and
- the control unit (4) is configured to control the optic arrangement (3) to change the angle of radiation (β) depending on the height (H) of the plants (6) by controlling the optic arrangement (3) to change the angle of radiation (β) depending on the measured height (H) of the plants (6).

7. The system (1) according to claim 6, wherein
- the measurement unit (5) is configured to measure the height (H) of the plants (6) by measuring the height (H) of at least one plant of the plants (6).

8. The system (1) according to claim 6 or 7, wherein
- the measurement unit (5) is configured to measure the height (H) of the plants (6) by measuring the height (H) of at least one plant (6a) of the plants (6) that is arranged at a border of an area comprising the plants (6).

9. The system (1) according to any one of claims 6 to 8, wherein
- the measurement unit (5) is configured to be positioned in an vertical direction above the plants (6) and to measure the height (H) of the plants by measuring in the vertical direction a distance (D) to at least one plant of the plants (6).

10. The system (1) according to any one of the previous claims, wherein
- the optic arrangement (3) comprises at least one optic element configured to change the angle of radiation (β) of the light (7) by changing a focal length of the optic arrangement (3).

11. The system (1) according to claim 10, wherein
- the at least one optic element is at least one liquid crystal lens.

12. The system (1) according to claim 10 or 11, wherein
- the at least one optic element is at least one movable lens.

13. The system (1) according to any one of the previous claims, wherein
- the control unit (4) is configured to control the light source (2) to keep the light intensity of the light (7) constant while controlling the optic arrangement (3) to change the angle of radiation (β) of the light (7).

14. The system (1) according to any one of the previous claims, wherein
- the system (1) is a luminaire for providing the light (7) to the plants (6).

15. A method for providing light (7) to plants (6), wherein the method comprises
- providing, in a vertical direction of growth of the plants, from a light source (2) positioned above the plants the light (7) to the plants (6); and
- controlling an optic arrangement (3) to change the angle of radiation (β) of the light (7) depending on a height (H) of the plants (6).
